(19) Europäisches Patentamt / European Patent Office / Office européen des brevets

(11) **EP 1 551 205 B1**

(12) **EUROPEAN PATENT SPECIFICATION**

(45) Date of publication and mention
of the grant of the patent:
**08.10.2008 Bulletin 2008/41**

(51) Int Cl.:
*H04S 7/00* (2006.01)     *H04M 3/56* (2006.01)
*H04M 7/00* (2006.01)     *H04M 11/00* (2006.01)

(21) Application number: **04029805.1**

(22) Date of filing: **15.12.2004**

(54) **Method and device for enhancing spatial audio in a teleconference system**

Verfahren und Vorrichtung zur Raumklangverbesserung in einem Telekonferenzsystem

PROCÉDÉ ET DISPOSITIF POUR AMÉLIORER L'AUDIO SPATIAL DANS UN SYSTÈME DE TÉLÉCONFÉRENCE

(84) Designated Contracting States:
**AT BE BG CH CY CZ DE DK EE ES FI FR GB GR
HU IE IS IT LI LT LU MC NL PL PT RO SE SI SK TR**

(30) Priority: **30.12.2003 US 750471**

(43) Date of publication of application:
**06.07.2005 Bulletin 2005/27**

(73) Proprietor: **Alcatel Lucent
75008 Paris (FR)**

(72) Inventor: **Yeh, Chiang
Sierra Madre, CA 91024 (US)**

(74) Representative: **Schmidt, Werner Karl et al
Alcatel Lucent
Intellectual Property & Standards
70430 Stuttgart (DE)**

(56) References cited:
**US-A- 5 335 011       US-A- 5 500 900
US-A- 5 659 619       US-A- 5 959 667
US-A- 6 078 669       US-A- 6 125 115**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The invention relates to spatial audio systems and in particular relates to systems and methods of producing, adjusting and maintaining natural sounds, e.g., speaking voices, in a telecommunication environment.

### BACKGROUND

Computer Telephone Integrated (CTI) audio terminals typically have multiple speakers or a stereo headset. The existence of multiple audio sources, and the flexibility in placing them, particularly in the case of computer audio speakers, creates the means to recreate a proper perspective for the brain to resolve the body's relationship to an artificial or remote speaking partner.

Telephone handsets and hands-free audio conferencing terminals do not take into account the relative position between the one or more speaking persons and their audience. Present devices simulate a single point source of an audio signal that emanates typically from a fixed position, whether it is sensed via compression diaphragm of the handset or the speaker of a teleconferencing system.

The relationship between this point source to the rest of the listener's body, specifically, his/her head, ears, shoulders, and chest, is drastically different compared how the relationship will be if the two participants were to speak face to face. The inaccurate portrayal of this relationship creates a pyschoacoustical phenomenon termed "listener's fatigue," produced when the brain cannot reconcile the auditory signal to a proper audio source, and over time this incongruity results in varying degrees of psychosomatic discomfort when the brain is confronted with this situation for a period of time.

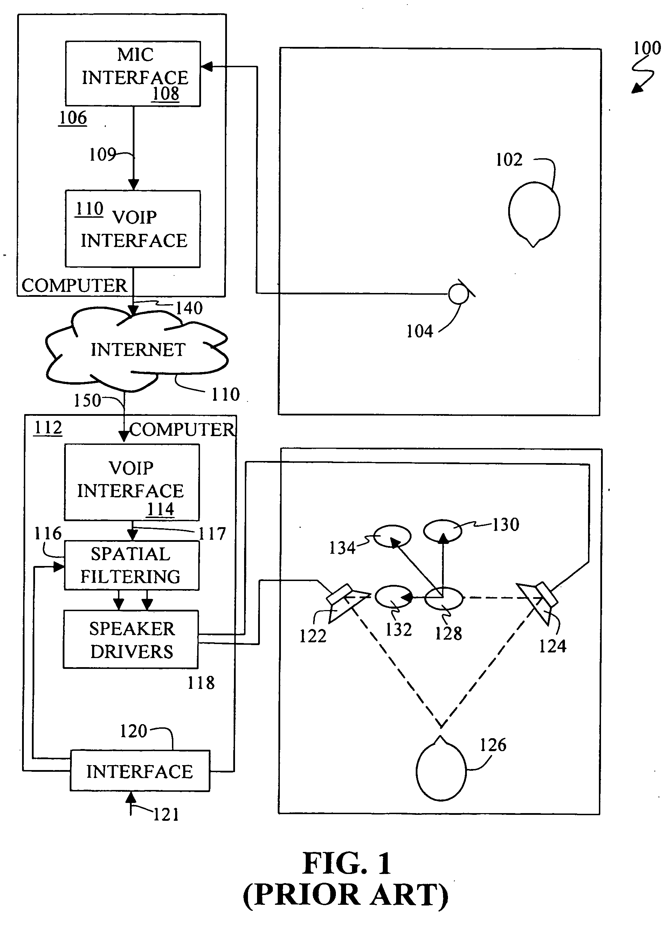

FIG. 1 illustrates a system 100 where a listener 126 exchanges audio signals with a remote human speaker 102. While both listener 126 and human speaker 102 may have similar interposed signal processing devices, only those elements necessary for illustrating the prior are illustrated. The user or listener 126, perceiving his or her counterpart, the human speaker 102 or source, as a flat sound wall 128 emanating from a left audio speaker 122 and a right audio speaker 124, for example. The flat sound wall 128 is not a realistic representation of an actual human audio source. In this example, a human speaker 102 is within pickup range of a microphone 104. The microphone 104 connects to a computer 106 wherein the audio signals are converted into a format compatible with being transmitted to the listener. For transmission via a Public Switched Telephone Network (PSTN) or other circuit switched system, the microphone interface 108 may perform analog anti-aliasing filtering before sending the analog signal to a coder-decoder for sampling, quantizing, and compressing the digital stream to be expanded and converted to analog signals on the receiving end. Alternatively, the digitized audio signals, particularly compressed and encoded voice signals, may be transmitted as data packets over a network such as the Internet. The Voice-over Internet Protocol (VoIP) is an example of such an Internet protocol that may use a Session Initiation Protocol (SIP) to define the VoIP switching fabric. From a communication processing interface like a VoIP interface 110, the voice data packets leave the human speaker's computer 106 and travel via the Internet 110 to the listener's computer 112. The listener's communication processing interface like the VoIP interface 114 of the listener's computer reconstructs the media stream into the monaural signal 117 similar to the signal recorded at the speaker's microphone 104. The destination processing 112 applies forms of spatial audio filtering 116 to shape the monaural signal 117 to then be sent to two or more audio speaker drivers 118. With equalization filtering alone, the pair of audio speakers 122,124 are perceived by the listener as being a flat source 128 that is equidistant between the two audio speakers 122, 124. Techniques are available for processing monaural signals to laterally translate the perceived source location 132 to the left or right of center by varying a transport delay between the two channels of a set of headphone, e.g., binaural processing. The left audio speaker 122 and right audio speaker 124 of the example illustrated in FIG. 1 may be spaced, for computer-based telephony interface layouts, at +5 degrees and - 5 degrees respectively from an axis having an origin at the listener and extending to and perpendicular with the audio speaker array. For teleconferencing environments, that spacing may be increased to +30 and -30 degrees. This audio speaker spacing produces crosstalk at the left and right ears of the listener. With transaural processing applied to cancel or substantially reduce crosstalk between audio speakers channels, the perceived audio effect can be enhanced. The perceived effect audio source translation is adjustable by the listener.

Psychoacoustic characteristics of the sound may be exploited in whole or part to create a perceived change in distance. Psychoacoustic characteristics of the sound of a source increasing in distance from the listener include: quieter due to the extra distance traveled, less high frequency content principally due to air absorption; more reverberant particularly in a reflective environment; less difference between time of direct sound and first floor reflection creating a straight wave front: and attenuated ground reflection. An additional spatial filter effect that follows is to lower the intensity, or volume, attenuate the higher frequencies, and add some forms of reverberation, for example, whereby the listener perceives the audio source increasing in distance from the listener. Again, this perceived effect is adjustable by the listener. Thus, the perceived audio source can be translated to the left for example 132, translated in added distance 130 or a combination of left translation and added distance 134.

For each ear of the listener, the Head-Related Impulse Response (HRIR) characterizes the impulse response, h(t), from the audio source to the ear drum, that is, the normalized sound pressure that an arbitrary source, x(t), produces at the listener's ear drum. The Fourier transform of h(t) is called the Head-Related Transfer Function (HRTF). The HRTF captures all of the physical cues to source localization. For a known HRTF for the left ear and the right ear, headphones aid in synthesizing accurate binaural signals from a monaural source. In the application of classical time and frequency domain analysis, the HRTF can be described as a function of four variables, i.e., three space coordinates and frequency. In spherical coordinates where distances are greater than about one meter, the source is said to be in the far or free field, and the HRTF falls off inversely with range. Accordingly, most HRTF measurements are free field measurements. Such a free field HRTF database of filter coefficients essentially reduces the HRTF to a function of azimuth, elevation and frequency. For a readily implementable system, the HRTF matrix of filter coefficients is further reduced to a function of azimuth and frequency.

For audio frequency, $\omega$, an angle in azimuth, $\phi$, in the horizontal plane, and an angle in the vertical plane, $\delta$, the Fourier transform of the sound pressure measured in the listener's left ear can be written as $P_{PROBE, LEFT}(j\omega, \phi, \delta)$ and the Fourier transform for the free field, independent of sound incidence, can be written as $P_{REFERENCE}(j\omega, \phi, \delta)$, where j represents the imaginary number, $\sqrt{-1}$. Accordingly, the free-field (ff) head-relative transfer function for the listener's left ear can be written as

$$H_{FF, LEFT}(j\omega, \phi, \delta) = [P_{PROBE, LEFT}(j\omega, \phi, \delta)] / [P_{REFERENCE}(j\omega, \phi, \delta)].$$

The HRTF then accounts for the sound diffraction caused by the listener's head, torso and, given manner in which measurement data are taken, outer ear effects as well. For example, the left and right HRTF for a particular azimuth and elevation angle of incidence can evidence a 20 dB difference due to interaural effects as well a 600 micro second delay (where the speed of sound, c, is approximately 340 meters/second).

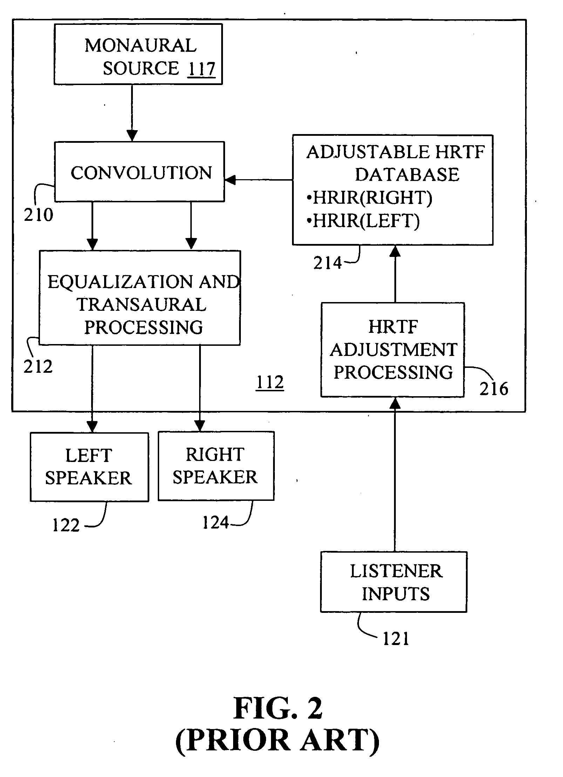

In the case of a listener with headphones, the typically binaural spatial filtering may include an array of HRTFs that when implemented as impulse response filters, are convolved with the monaural signal to produce a perceived effect of hearing a natural audio source, that is one having interacted with the head, torso and outer ear of the listener. FIG. 2 illustrates the case of audio speakers, particularly an array having a left audio speaker 122 and a right audio speaker 124 where, as part of the listener's processing interface 112, the spatial filtering includes the convolution of filters representing HRTFs as well as transaural processing to cancel the crosstalk. HRTF databases, most commonly for a free field plane, are available and are mechanized as filters with tunable or otherwise adjustable coefficients. The listener can select nominal filters for the left and right ear as listener inputs 121. The HRTF adjustments 216 may be for left and right translation where channel-to-channel delay may be employed, or may be for increased distance where intensity decrease, high frequency attenuation and reverberation may be introduced or may be for enhancing the natural sound of the audio speakers 122, 124 where coefficients of the filters representing the HRTF database 214 may be adjusted, or any combination thereof. The resulting filters, amplitudes and delays are convolved with the reconstructed monaural source 117 with the two channels being equalized, and transaurally corrected 212 before the signals are sent to the audio speakers 122, 124.

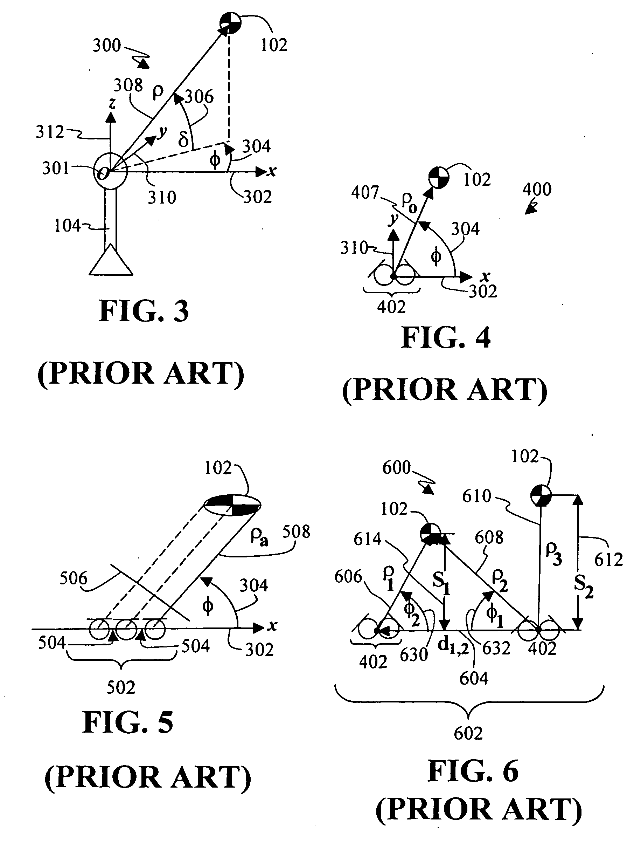

FIG. 3 illustrates a monaural microphone and an example of its spherical coordinate system 300. From a first reference axis 302, x, one subtends an azimuth angle 304, $\phi$, one next subtends an elevation angle 306, $\delta$. Along this directional vector, the audio source 102 lies a distance, $\rho$, from the microphone origin 301, **O**. Other microphones have left and right microphones integral to a single device, i.e., coincident, providing directionality principally from the pressure differences. FIG. 4 illustrates a coincident microphone 402 having two principal sensing elements in a horizontal plane 400. In the horizontal plane, the audio source 102 subtends an azimuth angle 304, $\phi$, from the reference axis 302, x, and lies a distance 407, $\rho_0$, from coincident microphone 402. By differencing the pressure sensed by the two elements for example, the azimuth angle 304, $\phi$, can be measured.

FIG. 5 illustrates an example of a two-dimensional microphone array that has microphones in an array 502 distributed linearly, each at an equal distance, *d* 504, from one another. For an azimuthal angle of incidence 304, $\phi$ from an audio source 102 distant enough from the microphone array 502 to produce a substantially linear wave front 506, the wave front 506 time of arrival delay between each microphone is characterized as an inverse z-transform:

$$z^{-1} = e^{-(jd\omega/c)\cos\phi}$$

The frequency response for an array of *n* such equally spaced microphones is expressed as:

$$H(j\omega) = \sum_{n=0}^{n-1} a_n e^{-j(\omega/c)nd\cos\phi}$$

Because the response functions as a spatial filter, $a_n$ may be adjusted and/or shaped with finite impulse response filtering to steer the array to an angle $\phi_0$ by inputting a time delay.

With the speed of sound, *c*, a nominal time delay, $t_0$, is set with

$$t_0 \geq nd/c$$

$$a_n = e^{j\omega t_0} e^{+j(\omega/c)nd\cos\phi_0}$$

With the adjustment of $a_n$ within the effective steerable array spatial filter, the 2D array of microphones are steerable to $\phi_0$. In addition, conditioning the output of each microphone with a finite impulse response filer, the *n*-1 nulls are available to be placed at *n*-1 frequencies to notch out and otherwise mitigate discrete, undesired, noise sources. The steerable array may employ passive sweeps, or infrared optics to augment source locations.

Stereophonic microphones are separated by distances that often precluding steerability, but providing time delay information nonetheless. For example, with two coincident microphones separated by a known distance, $\mathbf{d}_{1,2}$, as illustrated in FIG. 6, the angle incidence to each, $\phi_1$ 632 and $\phi_2$ 630 is measured from which both $\rho_1$ 606 and $\rho_2$ 608 may be determined as well as the distance, $\mathbf{s}_1$ 614, from the array. For example, applying the Law of Sines:

$$\rho_1 = [\mathbf{d}_{1,2} \sin \phi_1]/[\sin(\pi - \phi_1 - \phi_2)];$$

$$\rho_2 = [\mathbf{d}_{1,2} \sin \phi_2]/[\sin(\pi - \phi_1 - \phi_2)];$$

and

$$\mathbf{s}_1 = \rho_1 \sin \phi_2 = \rho_2 \sin \phi_1.$$

Where omnidirectional or coincident microphones 402 may provide inadequate resolution of their respective angles of incident, a steerable array of microphones 602 can be exchanged for each to enhance coincident microphones resolution. Also illustrated in FIG. 6 is the arrangement where an audio source 102 is directly aligned with one microphone position. In such an arrangement, any other microphone positions along a 2D array line will sense the audio source signals with delay relative to the first microphone position. This delay and known microphone positions are used to resolve the distance, $\mathbf{s}_2$ 612, which should be substantially the same as $\rho_3$ 610, of the audio source 102 from the array 602 and can be used to refine the angle of incidence, $\phi_1$ 632 and $\phi_2$ 630, for those microphones not directly in line, with the audio source 102.

US 6,125,115 discloses a computer network teleconferencing system in which audio signals are coupled to or associated with source indicators, such as source addresses in TCP protocol packets. Three-dimensional spatialization transforms are applied to audio data according to the source of such data so that, upon reproduction, a listener perceives different participants as being located in different spaced-apart locations within a 3-D spatialization region. Preferably, the user may select or modify the apparent location of the teleconference participants.

US 5,659,619 discloses a three-dimensional virtual audio display method which includes generating a set of transfer function parameters in response to a spatial location or direction signal. An audio signal is filtered in response to the set of transfer function parameters. The set of transfer function parameters are selected from or interpolatated among parameters derived by smoothing frequency components of a known transfer function over a bandwidth which is a non-constant function of frequency. The smoothing includes for each frequency component in at least part of the audio band of the display, applying a mean function to the amplitude of the frequency components within the bandwidth containing the frequency component, and noting the parameters of the resulting compressed transfer function.

US 5 872 743 discloses a method for adjusting the sound emitted by a computer systhem in order to enhance the sound effects at the location of the user, which is determined by processing the sound waver being reflected by himself.

## SUMMARY

The present invention in its several embodiments includes a method as claimed in claim 1 and a system as claimed in claim 6 for processing sound data received at a microphone, including steps of: transmitting sound waves toward a subject having a torso and a head via an audio speaker array; receiving the reflected sound waves via a microphone array; processing the received sound waves to determine time-relative changes in subject head orientation and subject torso orientation; translating the determined time-relative changes in subject orientation into changes in an audio source spatial data set using a sound conditioning filter database having filters characterized by a stored set of coefficients wherein each stored set of filter coefficients is a function of at least one element of the audio source spatial data set, to determine two or more stored sets of coefficients proximate to the at least one element of the audio source spatial data set; interpolating between the determined two or more stored sets of coefficients; convolving the sound data with a shaping filter having the interpolated filter coefficients; and transmitting the resulting signal to a sound-producing device. Example sound-producing devices that support effective three dimensional (3D) audio imaging includes headphones and audio speaker arrays.

A preferred embodiment accommodates a spatial data set having a first angle of incidence relative to the microphone, a second angle of incidence relative to the microphone substantially orthogonal to the first angle of incidence, or a distance setting relative to the microphone, or any combination thereof.

The several system embodiments of the present invention for spatial audio source tracking and representation include one or more microphones; a microphone processing interface for providing a sound data stream and an audio source spatial data set; a processor for modifying spatial filters based on the audio source spatial data set and for shaping the sound data stream with modified spatial filters; and a sound-producing array, e.g., headphones or an array of audio speakers. As with the method embodiments, the spatial data set include an audio source distance setting relative to the one or more microphones and a first audio source angle of incidence relative to the one or more microphones either separately or in combination and may include a second audio source angle of incidence relative to the one or more microphones, the second audio source angle of incidence being substantially orthogonal to the first audio source angle of incidence. In some embodiments, the system also includes a first communication processing interface for encapsulating the sound data and an audio source spatial data set relative to the one or more microphones into packets; and transmitting via a network the packets; and a second communication processing interface for receiving the packets and de-encapsulating sound data and the audio source spatial data set. In some embodiments, the system also includes a first communication processing interface for encoding the sound data and an audio source spatial data set relative to the one or more microphones into telephone signals; and transmitting via a circuit switched network; and a second communication processing interface for receiving the telephone signal and de-encoding the sound data and the audio source spatial data set.

## BRIEF DESCRIPTION OF THE DRAWINGS

FIG. 1 illustrates a speaker-listener session of the prior art;
FIG. 2 illustrates the incorporation of HRTFs of the prior art;
FIG. 3 illustrates a microphone-centered spherical reference frame of the prior art;
FIG. 4 illustrates a microphone-centered polar reference frame of the prior art;
FIG. 5 illustrates a steerable microphone array of the prior art;
FIG. 6 illustrates a coincident microphone array for determining relative angle of incidence and relative distance of the prior art;

FIG. 7 illustrates a speaker-listener session embodiment of the present invention;

FIG. 8 illustrates a functional block diagram of an embodiment of the present invention;

FIG. 9 illustrates a speaker-listener session embodiment of the present invention;

FIG. 10 illustrates a functional system block diagram of an embodiment of the present invention;

FIG. 11 illustrates a functional block diagram of an embodiment of the present invention;

FIG. 12 illustrates a tuning embodiment of the present invention; and

FIG. 13 illustrates a tuning embodiment of the present invention.

## DETAILED DESCRIPTION

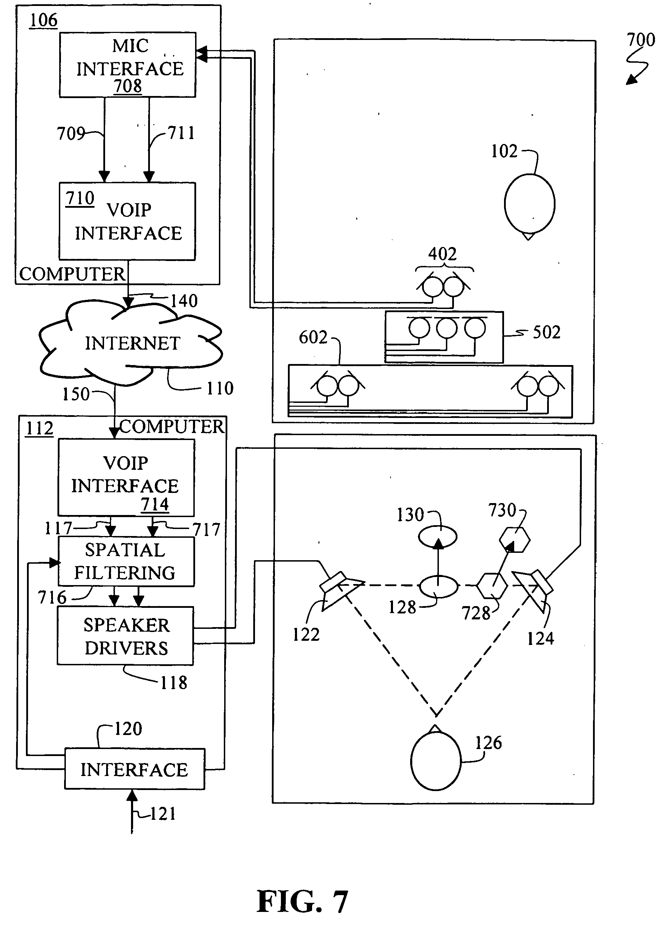

FIG. 7 illustrates voice data transmission from a human speaker 102 to a human listener 126 via a first voice processing device 106 and a second voice-processing device 112 operably connected by a network such as the Internet 110. In this example, a coincident microphone 402 captures the voice of the human speaker 102. A steerable array of microphones 502 or a distributed array 602 of coincident microphones 402 or omnidirectional microphones are alternatives that may be preferred for teleconferencing. The microphone interface 708 may include filters necessary to shape the audio signals prior to digitization to minimizing aliasing effects, for example. The microphone interface 708 may include sampling and quantizing the signal to produce a digital stream. The microphone interface 708 may also include digital signal processing for deriving an angle of incidence of the audio source 102 in a measurable plane and may include nulling or notching filters to eliminate noise sources directionally.

Conceptually, the voice data is transmitted via a data plane. In implementation, the captured voice for example is, in the preferred embodiment, converted into a format acceptable for transmission over the Internet such a VoIP thereby encapsulating the voice data with destination information for example. The second voice-processing device 112 de-encapsulates the voice data from the VoIP protocol 714 into a monaural digital signal 117. The monaural signal 117 is convolved with spatial audio filtering 716, converted via speaker drivers 118 to drive two channels in this example each having an audio speaker 122, 124. The listener may have indicated 121 selections, via an interface 120 for the spatial audio filtering to draw from a bank of HRTFs that are either close to the listener in acoustical effect or tuned for the listener. In the preferred operation, the resulting effect is an audio source for the listener that is more natural and in this example, the audio "image" may be centered between the two audio speakers, moved left or right of center by the listener and given frequency response shaping, reverberation and amplitude reductions that may produce an effect of a more distant source. While the HRTF has in the past been described and analyzed according to classical time and frequency domain analysis, it is important to note that the same relationships can be alternatively modeled in the wavelet domain, i.e., instead of describing the model as a function of time, space, or frequency; the same model can be described as a function of basis functions of the one or more of the same variables. This technique, as well as other modern mathematical techniques, such as fractal analysis, a modeling technique based on self-similarity of multivariable functions, may be applied in some embodiments with intent of achieving greater processing and storage efficiencies with greater accuracy than that the classical methodologies.

In the embodiment of the present invention illustrated in FIG. 7, the microphone interface 708 in addition to other signal processing functions, derives an angle of incidence, $\phi$, for the voice of the human speaker 102 preferably relative to the microphone 402 or center of the microphone array 502, 602, for example. Conceptually, this angle of incidence may be communicated on the signal plane. In a preferred implementation, this derived angle incidence, $\phi$, as source-to-microphone relative spatial data 711 is encapsulated along with the voice data 709 with an extended VoIP 710, accommodating this data, and the data is transmitted as packets 140, 150 via a network 110 to a second VoIP processing device 112 enabled to de-encapsulate the extended VoIP data packets at the communication processing interface 714 having angle of incidence, $\phi$, data into a reconstructed monaural signal 117 and the reconstructed source-to-microphone relative spatial data 717. The spatial filtering of the second VoIP processing device 112 includes the angle of incidence information by interpolating 716 the selected HRTFs to account for an angle of incidence if not already overridden by the listener via listener inputs 121 at the listener interface 120. In this example, the human speaker 102 is left of center of a microphone assembly 402 or array 502, 602. With the listener 126 having set the source preference to be that the human speaker acoustical image is nominally facing the listener when the listener is facing the audio speaker array 122, 124, then the resulting "imaged" audio source 728 is perceived to be right of center of the audio speaker array 122, 124. In addition, the listener may choose to add depth cues to push off the perceived distance of the translated human speaker 730 to be aft to the audio speaker array. Alternatively, the listener 126 may select to ignore the angle of incidence information in the processing of his spatial filtering of the monaural signals, leaving the "imaged' source to be in the center 128 of the speaker array 122, 124. The user may add distance effects 130 if he so desires.

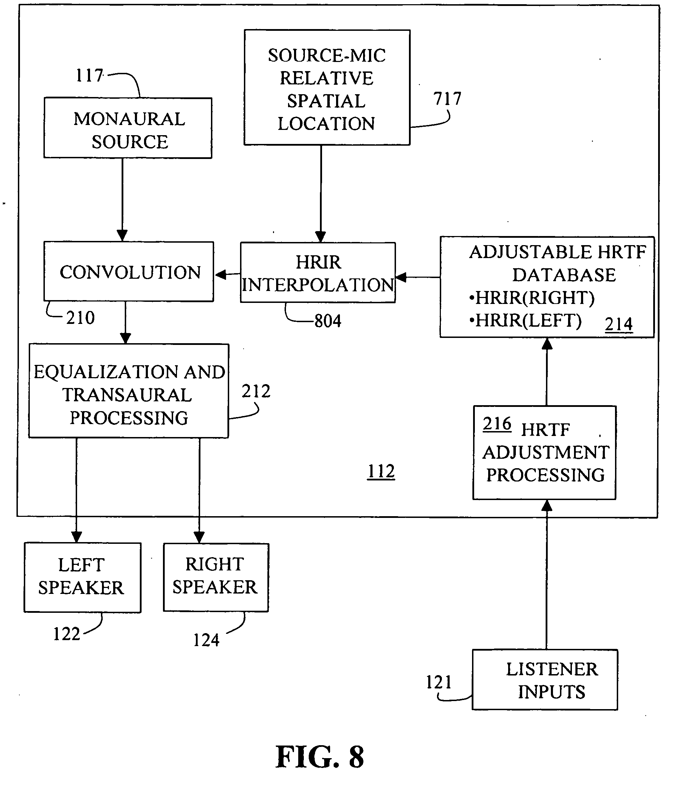

As illustrated in FIG. 8, the first transmitted angle of incidence, the second transmitted angle of incidence substantially orthogonal to the first transmitted angle of incidence, or a relative distance setting or any combination 717 is used to drive the interpolation 804 of the HRTF database to a solution of filter coefficients between previously quantified incident angles, i.e., those having filter coefficient arrays based on acoustical measurements, so that the convolution includes the spatial filters adjusted for one or both of the transmitted incidence angles. In embodiments having planar implementations, the HRTFs may be a function of frequency and azimuth angle. In a horizontal plane HRTF interpolation example, the interpolation can be a linear interpolation of the HRTF coefficients for the stored azimuth angles of incidence that bound the derived azimuth angle of incidence. While the above example is illustrated in a horizontal plane, the invention is readily extended to a three-dimensional array where the microphone array and audio speaker array is in a plane rather than linear. In the three-dimensional implementation, the HRTFs may be a function of frequency, azimuth and elevations angles of incidence where the range is removed in free field implementations. In a horizontal and vertical HRTF interpolation example, the interpolation can be a linear interpolation of the HRTF coefficients for the stored azimuth and elevation angles of incidence pairs that bound the derived azimuth angle of incidence and the derived elevation angle. Conceptually, this is interpolating to a point within a parallelogram region defined by the stored coefficients as functions of pairs of azimuth and elevation angles of incidence. Higher order and nonlinear interpolations may be applied where appropriate to properly scale the perceived effect. Where interpolation is inadequate to supply the shaping sought for the acoustical "image" for all expected angles of incidence, then increasing the resolution of the HRTF database may be required.

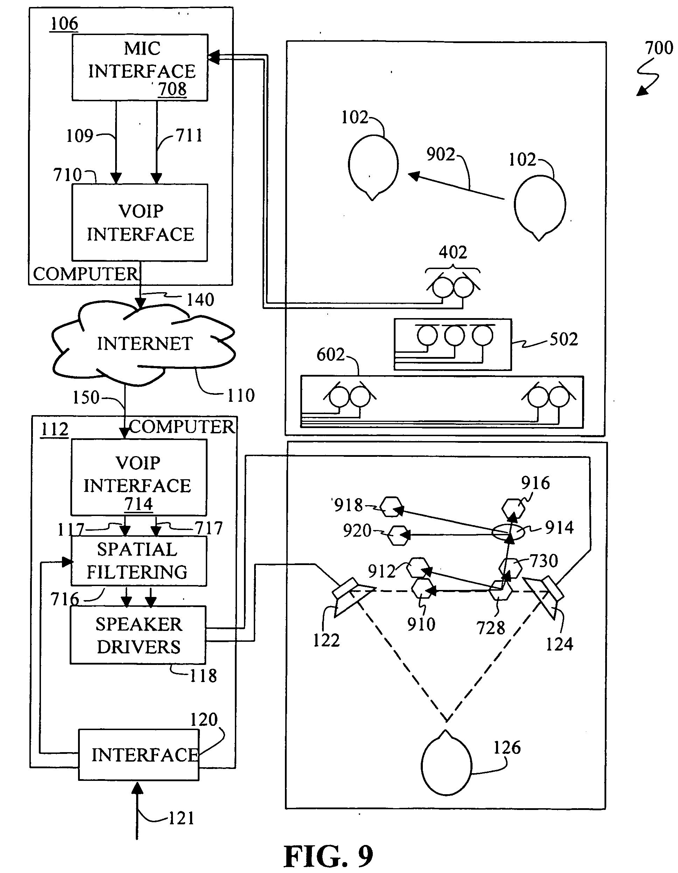

In FIG. 9, the speaking human 102 moves from a first location to a second location during a session where the distance relative to the microphone 402 or microphone array 502, 602 is characterized as a vector 902 having time differences in measured angles of incidence and differences in perceived distance settings. The microphone interface processing 706 of the microphones 402 or microphone array 502, 602 in this example for the first location may yield an initial angle of incidence of sufficient quality to be included along with the voice data in data packets and transmitted over a network. The listener interface processor 112 processes 716 the angle of incidence and places the perceived audio source to the right of center of the two audio speakers 728. This is an automatic nominal setting. The listener can override this effect and may adjust the filters to induce a distancing effect 730 for a listener-selected nominal position of the acoustical "image." The new position of the human speaker is derived from the microphone processing 708 and via the VoIP communication processing interface 710, whereby the new angle of incidence is transmitted to effect, in the signal processing 716, the interpolation 804 in the signal processing 716 of the coefficients of the HRTFs. In this example, the microphone processing also derives a relative change in the distance of the human speaker 102 relative to a reference point of the microphones 402 or microphone array 502, 602. As with the derived angle of incidence, the derived relative distance may be included as relative spatial data 711 along with the voice data 709 in data packets preferably the VoIP 710 and transmitted over a network 110. The listener interface processing 112 may then account for the change in angle of incidence 910 from a nominal derived position 728 or may then account for the change in derived relative distance 730, or account for both 912. If the listener set a perceived distance 914 or angle or both for the human speaker, then the listener interface processing may account for the change in angle of incidence 920, change in distance 916, or both 918.

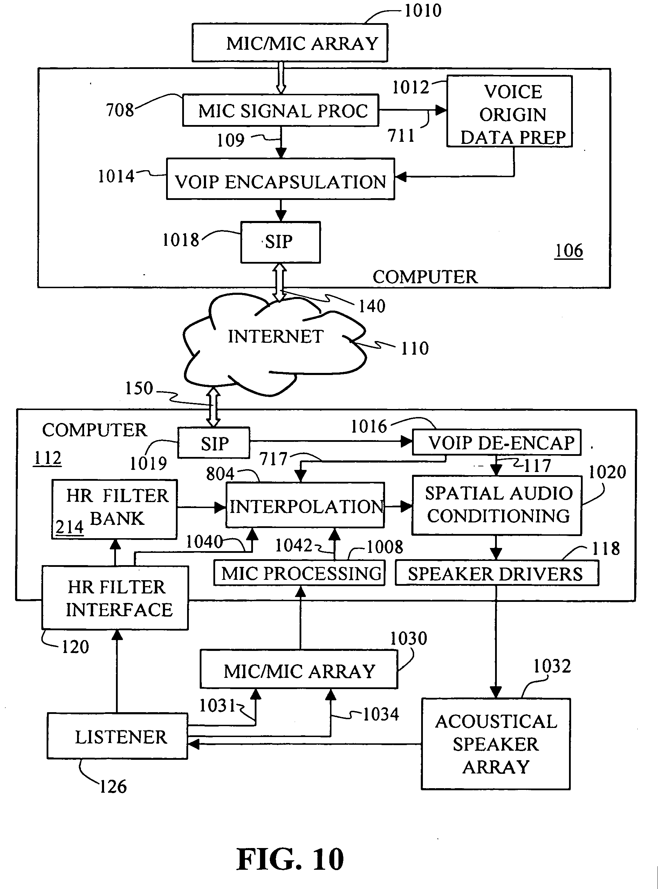

FIG. 10 illustrates an example of an embodiment of the system in one direction of transmission with the understanding that the bi-directional transmission is intended as well with each participant in the voice exchange having the necessary devices and functionality. The microphones or microphone array 1010 is connected with the computer 106 of the human speaker 102. The microphone signal processing 708 may include analog filters to mitigate aliasing for example and digital filters for setting nulls or notches and for reducing cross-talk for example. If available, the microphone signal processing 708 determines one or both of the angles of incidence and the nominal distance setting of the human speaker 102 relative to the microphone array 1010, i.e., the voice origin data 711. The determined relative angle of incidence and relative distance settings are prepared 1012 to be added to packets according to the VoIP and then the voice data 109 are encapsulated along with the voice origin data 711 according to the enhanced VoIP communication processing interface 1014. With a session established 1018, 1019, the voice and voice origin data are sent to the listener via the Internet 110. The computer of the listener 112 receives the data packets 150 and de-encapsulates the voice data packets according to the enhanced VoIP communication processing interface 1016. The voice data provides the monaural signal 117 and the voice origin data 717 may be used, depending upon the settings 1040 input by the listener 126 via the HR filter interface 120, in the HRTF interpolation 804 of spatial filter coefficients 214 for the conditioning 1020 of the monaural signals 117. Also illustrated is a pathway via the listener microphone or microphone array 1030 whereby the listener 126 may, in some embodiments, effect by his voice characteristics 1031, changes in the interpolation by the microphone or microphone array processing 1008 determining changes the listener' state 1042, particularly changes in the listener's relative angle of incidence to, and changes in the listener's relative distance from, the microphone or microphone array. This same pathway may be exploited passively in some embodiments to process acoustical waves originally emanating from the acoustical speaker array 1032 and diffusing 1034 from the listener's body and body parts particularly including the head and torso.

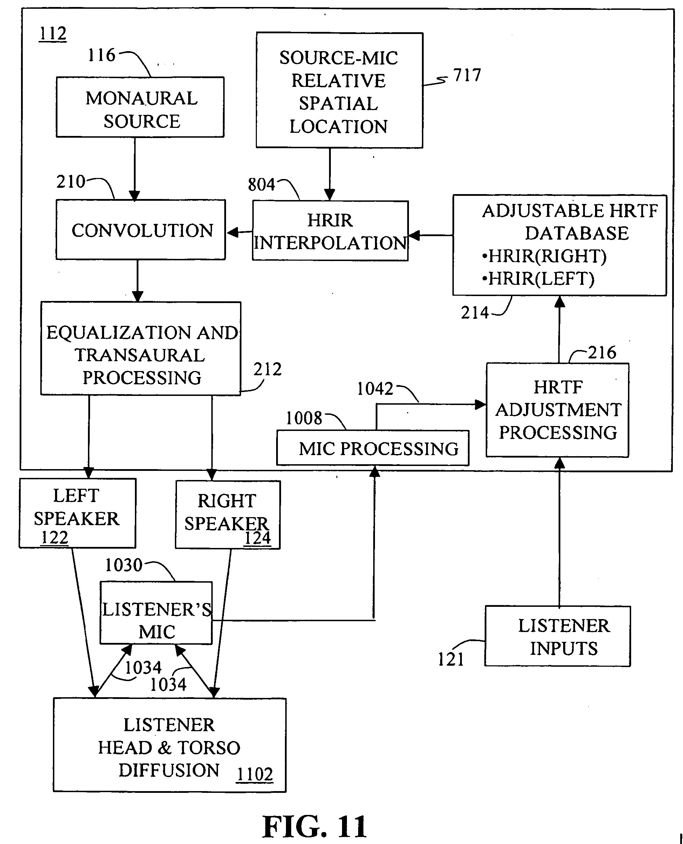

FIG. 11 illustrates in an expanded view the functional block diagram of the passive pathway process where acoustical waves are reflected 1034 by the listener's head or torso, or both 1102, and registered by the listener's microphone or microphone array 1030. The frequency content of the acoustical waves are preferably selected to provide the most probative effect of the changes in the listener's orientation where interpolation may readily effect improvements and corrections to the perceived source. Filters downstream from the microphone or microphone array may be employed to eliminate or otherwise ameliorate unwanted sound sources proximate to the listener. The corrective potential of this passive path is enhanced with additional audio speakers, with additional microphones and with an anechoic environment.

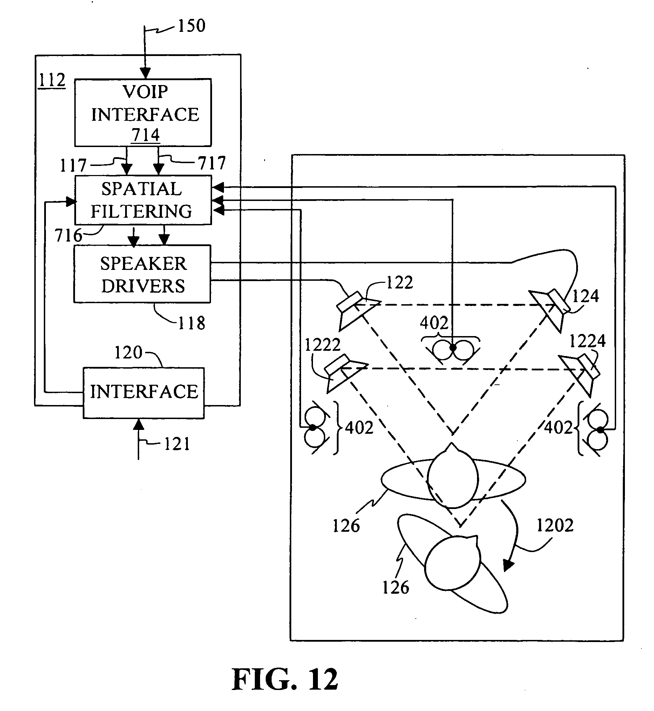

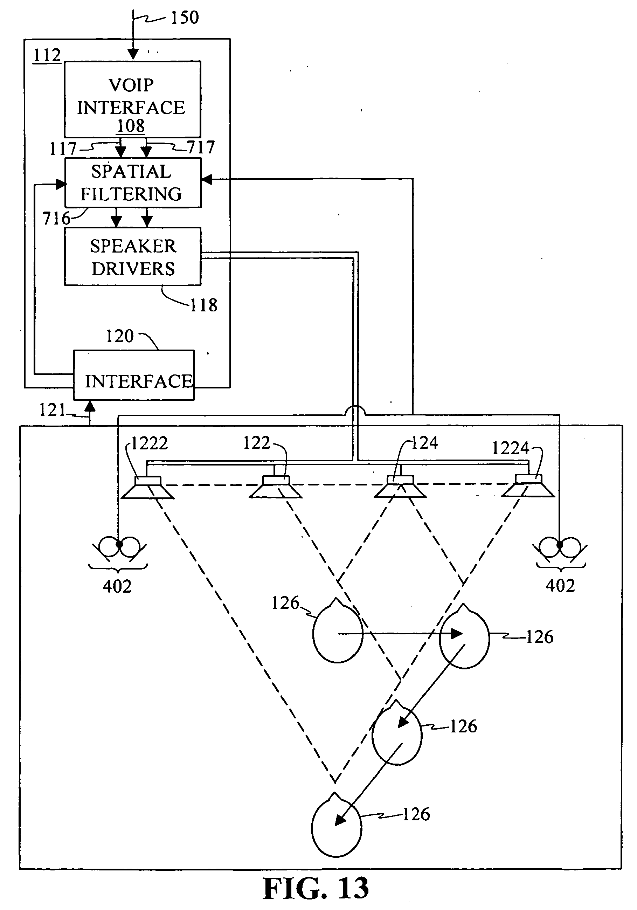

FIG. 12 illustrates an example array of microphones and an example array of acoustical speakers where the listener 126 originally sets 120, 121 the HR filters to a desirable acoustical "image" of the human speaker source. The listener moves away from the front microphone and turns to the place head and torso at an angle relative to the front line of audio speakers 1202. To the extent these changes in listener orientation are discernable by the microphones and microphone signal processing, there is then an automatic adjustment, via the interpolation of HRTF bank, with the resulting acoustical image being corrected for the listener's change in orientation. The acoustical measurements may also be augmented with passive optical sensing and by manual adjustments of the listener. FIG. 13 illustrates, together with FIG. 12, a translation only example of exploiting the listener microphone or microphone array 1030 pathway where the acoustical speaker array includes, for example, left and right audio speakers 122, 124, and additional left and right audio speakers 1222, 1224 that are responsive to the relative changes in the listener's relative translational position and rotational position 1202. If done actively, the microphone processing 1008 is principally dependent upon the voice of the listener 126. If done passively, the process is similar to the passive process as described and illustrated in FIG. 12.

Where headphones are used by the listener, true binaural effect achieved without the need for the much transaural processing, if any, of the audio speaker embodiments. But, preferably head-tracking is employed to accommodate the listener rotation in the interpolation process to "stabilize" the perceived location of the audio source.

While the above examples have been with data packets typical of Internet-based communications, the invention in other embodiments is readily implementable via encoding on switched circuits, for example in a Integrated Services Digital Network (ISDN) preferably with users having computer telephony interfaces.

The following method/s and/or method step/s as well as the following feature/s or combinations thereof constitute further advantageous embodiments of the described invention:

- The described method wherein the spatial data set comprises an audio source distance setting relative to the one or more microphones;

- The described method wherein the spatial data set comprises a first audio source angle of incidence relative to the one or more microphones;

- The described method wherein the spatial data set comprises an audio source distance setting relative to the one or more microphones;

- The described method wherein the spatial data set further comprises a second audio source angle of incidence relative to the one or more microphones, the second audio source angle of incidence being substantially orthogonal to the first audio source angle of incidence;

- The described method further comprising the steps of: encapsulating the sound data and an audio source spatial data set relative to the one or more microphones into packets; transmitting via a network the packets; and receiving and de-encapsulating from the packets the sound data and the audio source spatial data set;

- The described method further comprising the steps of: encoding the sound data and an audio source spatial data set relative to the one or more microphones into telephone signals; transmitting via a circuit switched network; receiving and de-encoding from the telephone signals the sound data and the audio source spatial data set;

- The described method wherein the sound-producing array is comprised of headphones;

- The described method wherein the sound-producing array is comprised of a plurality of audio speakers;

- A method of spatial filter tuning comprising transmitting sound waves toward a subject having a torso and a head via a sound-producing array; receiving the reflected sound waves via one or more microphones; processing the received sound waves to determine time-relative changes in subject head orientation and subject torso orientation; translating the determined time-relative changes in subject orientation into changes in an audio source spatial data set; determining, in a sound conditioning filter database having filters characterized by a stored set of coefficients wherein each stored set of filter coefficients is a function of at least one element of the audio source spatial data set, two or more stored sets of coefficients proximate to the at least one element of the audio source spatial data set; interpolating between the determined two or more stored sets of coefficients, convolving the sound data with a shaping filter having the interpolated filter coefficients; and transmitting the resulting signal to the sound-producing array;

- The described method further comprising the step of determining a first audio source angle of incidence relative to the one or more microphones for inclusion in the spatial data set;

- The described method further comprising the steps of: determining, for a session, a nominal audio source distance set point relative to the one or more microphones; and determining an audio source distance setting relative to the determined nominal distance set point for inclusion in the spatial data set;

- The described method further comprising the step of determining a second audio source angle of incidence relative to the one or more microphones, the second audio source angle of incidence being substantially orthogonal to the first audio source angle of incidence for inclusion in the spatial data set;


**Claims**

1. A method of processing sound data received at one or more microphones (402, 502, 602), the method comprising the steps of:

   - receiving a transmission having sound data (117) and an audio source spatial data set (717) relative to the one or more microphones (402, 502, 602);
   - determining, in a sound conditioning filter database having filters **characterized by** a stored set of coefficients wherein each stored set of filter coefficients is a function of at least one element of the audio source spatial data set (717), two or more stored sets of coefficients proximate to the at least one element of the audio source spatial data set (717);
   - interpolating between the determined two or more stored sets of coefficients;
   - convolving the sound data (117) with a shaping filter having the interpolated filter coefficients;
   - transmitting the resulting signal to a sound-producing array (122, 124) which transmits corresponding sound waves toward a subject (126) having a body, in particular a torso and a head,

   **characterized by**:

   - receiving the reflected sound waves via one or more microphones (1030) associated to said subject (126),
   - processing the received sound waves to determine time-relative changes in subject head orientation and subject torso orientation and/or the subject's position,
   - translating the determined time-relative changes in subject orientation and/or position into changes of said audio source spatial data set (717).

2. The method of claim 1 further comprising the step of determining a first audio source angle of incidence relative to the one or more microphones (402, 502, 602) for inclusion in the spatial data set (717).

3. The method of claim 2 further comprising the steps of:

   determining, for a voice-over-Internet Protocol session, a nominal audio source distance set point relative to the one or more microphones (402, 502, 602); and determining an audio source distance setting relative to the determined nominal distance set point for inclusion in the spatial data set (717).

4. The method of claim 2 further comprising the step of determining a second audio source angle of incidence relative to the one or more microphones (402, 502, 602), the second audio source angle of incidence being substantially orthogonal to the first audio source angle of incidence for inclusion in the spatial data set (717).

5. The method of claim 4 further comprising the steps of:

   determining, for a voice-over-Internet Protocol session, a nominal audio source distance set point relative to the one or more microphones (402, 502, 602); and determining an audio source distance setting relative to the determined nominal distance set point for inclusion in the spatial data set (717).

6. A system for spatial audio source tracking and representation comprising: one or more microphones (402, 502, 602); a microphone processing interface (708) for providing a sound data stream (709) and an audio source spatial data set (717); a processor for modifying spatial filters based on the audio source spatial data set (711) and for shaping the sound data stream (117) with modified spatial filters; and a sound-producing array (122, 124) configured to transmit sound waves corresponding to a shaped sound data stream toward a subject (126) having a body, in particular a torso and a head, **characterized by** one or more microphones (1030) associated to said subject (126) which are configured to receive the reflected sound waves, **characterized in that** said processor is configured to process the received sound waves to determine time-relative changes in subject head orientation and subject torso orientation and/or the subject's position and to translate the determined time-relative changes in subject orientation and/or position into changes of said audio source spatial data set (717).

7. The system of claim 6 wherein the system further comprises:

a first communication processing interface (710) for encapsulating the sound data (709) and an audio source spatial data set (711) relative to the one or more microphones (402, 502, 602) into packets; and transmitting via a network (110) the packets; and a second communication processing interface (714) for receiving the packets and de-encapsulating sound data (117) and the audio source spatial data set (717).

8. The system of claim 6 wherein the system further comprises:

a first communication processing interface for encoding the sound data (709) and an audio source spatial data set (711) relative to the one or more microphones (402, 502, 602) into telephone signals; and transmitting via a circuit switched network; and a second communication processing interface for receiving the telephone signal and de-encoding the sound data and the audio source spatial data set.

**Patentansprüche**

1. Ein Verfahren zur Verarbeitung von an einem oder mehreren Mikrofonen (402, 502, 602) empfangenen Tondaten, wobei das Verfahren die folgenden Schritte umfasst:

- Empfangen einer Übertragung mit Tondaten (117) und einem Audioquellen-Raumdatensatz (717) in Verbindung mit dem einen oder mehreren Mikrofonen (402, 502, 602):
- Bestimmen, in einer Tonaufbereitungsfilter-Datenbasis mit Filtern, **gekennzeichnet durch** einen gespeicherten Satz von Koeffizienten, wobei jeder gespeicherte Satz von Filterkoeffizienten eine Funktion von mindestem einem Element des Audioquellen-Raumdatensatzes (717) ist, von zwei oder mehreren gespeicherten Sätzen von Koeffizienten, welche annähernd dem mindestens einen Element des Audioquellen-Raumdatensatzes entsprechen (717);
- Interpolation zwischen den bestimmten zwei oder mehreren gespeicherten Sätzen von Koeffizienten;
- Konvolution der Tondaten (117) mit einem Formungsfilter, welcher die interpolierten Filterkoeffizienten aufweist;
- Übertragen des sich daraus ergebenden Signals an ein Tonerzeugungs-Array (122, 124), welches die entsprechenden Schallwellen in Richtung eines Subjektes (126) mit einem Torso und einem Kopf überträgt, **gekennzeichnet durch:**
- Empfangen der reflektierten Schallwellen über ein oder mehrere dem besagten Subjekt (126) zugeordnete Mikrofone (1030),
- Verarbeiten der empfangenen Schallwellen, um zeitbezogene Änderungen in der Ausrichtung des Kopfes des Subjekts und in der Ausrichtung des Torso des Subjekts und/oder in der Position des Subjekts zu ermitteln,
- Konvertieren der ermittelten zeitbezogenen Änderungen in der Ausrichtung und/oder in der Position des Subjekts in Änderungen des besagten Audioquellen-Raumdatensatz (717).

2. Das Verfahren nach Anspruch 1, welches weiterhin den Schritt des Ermittelns eines ersten Einfallswinkels der Audioquelle im Verhältnis zu dem einen oder den mehreren Mikrofonen (402, 502, 602) zum Eingliedern in den Raumdatensatz (717) umfasst.

3. Das Verfahren nach Anspruch 2, welches weiterhin die folgenden Schritte umfasst:

Ermitteln, für eine Sprachübermittlung über das Internet Protokoll, eines nominalen Entfernungssollwerts der Audioquelle im Verhältnis zu dem einen oder den mehreren Mikrofonen (402, 502, 602); und Bestimmen einer Entfernungseinstellung der Audioquelle entsprechend dem ermittelten nominalen Entfernungssollwert zum Eingliedern in den Raumdatensatz (717).

4. Das Verfahren nach Anspruch 2, welches weiterhin den Schritt des Ermittelns eines zweiten Einfallswinkels der Audioquelle im Verhältnis zu dem einen oder den mehreren Mikrofonen (402, 502, 602) umfasst, wobei der zweite Einfallswinkel der Audioquelle im Wesentlichen orthogonal zu dem ersten Einfallswinkel der Audioquelle ist, zum Eingliedern in den Raumdatensatz (717).

5. Das Verfahren nach Anspruch 4, welches weiterhin die folgenden Schritte umfasst:

Ermitteln, für eine Sprachübermittlung über das Internet Protokoll, eines nominalen Entfernungssollwerts der Audioquelle In Verbindung mit dem einen oder den mehreren Mikrofonen (402, 502, 602); und Bestimmen einer Entfernungseinstellung der Audioquelle entsprechend dem ermittelten nominalen Entfernungssollwert zum Eingliedern in den Raumdatensatz (717).

6. Ein System für die räumliche Verfolgung und Darstellung der Audioquelle, welches umfasst: ein oder mehrere Mikrofone (402, 502, 602); eine Mikrofonverarbeitungsschnittstelle (708) für das Bereitstellen eines Tondatenstroms (709) und eines Audioquellen-Raumdatensatzes (717); einen Prozessor zum Ändern des Raumfilters auf der Basis des Audioquellen-Raumdatensatzes (711) und zum Formen des Tondatenstroms (117) mit geändertem Raumfilter; und ein Tonerzeugungs-Array (122, 124), welches für die Übertragung von Schallwellen, welche einem geformten Tondatenstrom entsprechen, an ein Subjekt (126) mit einem Körper, insbesondere einem Torso und einem Kopf, konfiguriert ist, **gekennzeichnet durch** ein oder mehrere dem besagten Subjekt (126) zugeordnete Mikrofone (1030), welche für den Empfang der reflektierten Schallwellen konfiguriert sind, **dadurch gekennzeichnet, dass** der Prozessor für die Verarbeitung der empfangenen Schallwellen konfiguriert ist, um die zeitbezogenen Änderungen in der Ausrichtung des Kopfes des Subjekts und in der Ausrichtung des Torsos des Subjekts und/oder der Position des Subjekts zu ermitteln und die ermittelten zeitbezogenen Änderungen in der Ausrichtung des Subjekts und/oder in der Position des Subjekts in Änderungen des besagten Audioquellen-Raumdatensatzes (717) zu konvertieren.

7. Das System nach Anspruch 6, wobei das System weiterhin umfasst: eine erste Kommunikationsverarbeitungsschnittstelle (710) zum Verkapseln der Tondaten (709) und einen Audioquellen-Raumdatensatz (711) in Verbindung mit dem einen oder den mehreren Mikrofone (402, 502, 602) und Paketen; und Übertragen der Pakete über ein Netzwerk (110); und eine zweite Kommunikationsverarbeitungsschnittstelle (714) für den Empfang der Daten und das Entkapseln der Tondaten (117) und des Audioquellen-Raumdatensatzes (717).

8. Das System nach Anspruch 6, wobei das System weiterhin umfasst: eine erste Kommunikationsverarbeitungsschnittstelle zum Codieren der Tondaten (709) und eines Audioquellen-Raumdatensatzes (711) in Verbindung mit dem einen oder den mehreren Mikrofonen (402, 502, 602) in Telefonsignale; und Übertragen über ein leitungsvermitteltes Netz; und eine zweite Kommunikationsverarbeitungsschnittstelle für den Empfang des Telefonsignals und das Decodieren der Tondaten und des Audioquellen-Raumdatensatzes.

**Revendications**

1. Procédé de traitement de données sonores reçues au niveau d'un ou plusieurs microphones (402, 502, 602), le procédé comprenant les étapes suivantes :

- réception d'une transmission ayant des données sonores (117) et un ensemble de données spatiales de source audio (717) relatives à un ou plusieurs microphones (402, 502, 602) ;
- détermination, dans une base de données de filtres de conditionnement de son ayant des filtres **caractérisé par** un ensemble de coefficients mémorisé dans lequel chaque ensemble de coefficients de filtres mémorisé est fonction d'au moins un élément de l'ensemble de données spatiales de source audio (717), deux ou plusieurs ensembles de coefficients mémorisés à proximité d'au moins un élément de l'ensemble de données spatiales de source audio (717) ;
- l'interpolation entre les au moins deux ensembles de coefficients déterminés mémorisés :
- l'enroulement des données sonores (117) avec un filtre actif ayant les coefficients de filtres interpolés ;
- la transmission du signal résultant à un ensemble de production de son (122, 124) qui transmet les ondes sonores correspondantes vers un sujet (126) ayant un corps, en particulier, un torse et une tête,

**caractérisé par** :

- la réception des ondes sonores réfléchies via un ou plusieurs microphones (1030) associés audit sujet (126).
- le traitement des ondes sonores reçues pour déterminer les changements temporels d'orientation de la tête du sujet et d'orientation du torse du sujet et/ou de la position du sujet,
- la traduction des changements temporels d'orientation et/ou de position du sujet déterminés en changements dudit ensemble de données spatiales de source audio (717).

**2.** Procédé selon la revendication 1 comprenant en outre l'étape de détermination d'un premier angle d'incidence de source audio par rapport à un ou plusieurs microphones (402, 502, 602) en vue de l'inclusion de l'ensemble de données spatiales (717).

**3.** Procédé selon la revendication 2 comprenant en outre les étapes suivantes :

détermination, pour une session de protocole voix sur Internet, d'un point de consigne de distance nominale de source audio par rapport à un ou plusieurs microphones (402, 502, 602) ; et détermination de la fixation d'une distance nominale de source audio par rapport au point de consigne de distance nominale déterminé en vue d'une inclusion dans l'ensemble de données spatiales (717).

**4.** Procédé selon la revendication 2 comprenant en outre l'étape de détermination d'un second angle d'incidence de source audio par rapport à un ou plusieurs microphones (402, 502, 602), le second angle d'incidence de source audio étant sensiblement orthogonal au premier angle d'incidence de source audio en vue d'une inclusion dans l'ensemble de données spatiales (717).

**5.** Procédé selon la revendication 4 comprenant en outre les étapes suivantes :

détermination, pour une session de protocole voix sur Internet, d'un point de consigne de distance nominale de source audio par rapport à un ou plusieurs microphones (402, 502, 602) ; et détermination de la fixation d'une distance de source audio par rapport au point de consigne de distance nominale déterminé en vue d'une inclusion dans l'ensemble de données spatiales (717).

**6.** Système permettant le suivi et la représentation d'une source audio spatiale comprenant : un ou plusieurs microphones (402, 502, 602) ; une interface de traitement de microphones (708) destinée à fournir un flot de données sonores (709) et un ensemble de données spatiales de source audio (717) ; un processeur destiné à modifier les filtres spatiaux sur la base de l'ensemble de données spatiales de source audio (711) et à former le flot de données sonores (117) avec les filtres spatiaux modifiés ; et un ensemble de production de son (122, 124) configuré pour transmettre les ondes sonores correspondant à un flot de données sonores formé vers un sujet (126) ayant un corps, en particulier un torse et une tête, **caractérisé par** un ou plusieurs microphones (1030) associés audit sujet (126) qui sont configurés pour recevoir les ondes sonores réfléchies, **caractérisé en ce que** ledit processeur est configuré pour traiter les ondes sonores reçues pour déterminer les changements temporels d'orientation de la tête du sujet et d'orientation du torse du sujet et/ou de position du sujet et traduire les changements temporels d'orientation et/ou de position du sujet déterminés en changements dudit ensemble de données spatiales de source audio (717).

**7.** Système selon le revendication 6 dans lequel le système comprend en outre :

une première interface de traitement de communication (710) destinée à encapsuler les données sonores (709) et un ensemble de données spatiales de source audio (711) par rapport à un ou plusieurs microphones (402, 502, 602) dans des paquets ; et à transmettre les paquets via un réseau (110) ; et une seconde interface de traitement de communication (714) destinée à recevoir les paquets et à désencapsuler les données sonores (117) et l'ensemble de données spatiales de source audio (717).

**8.** Système selon la revendication 6 dans lequel le système comprend en outre:

une première interface de traitement de communication destinée à coder les données sonores (709) et un ensemble de données spatiales de source audio (711) par rapport à un ou plusieurs microphones (402, 502, 602) en signaux téléphoniques ; et à transmettre via un réseau à commutation de circuits ; et une seconde interface de traitement de communication destinée à recevoir le signal téléphonique et à décoder les données sonores et l'ensemble de données spatiales de source audio.

**FIG. 1**
**(PRIOR ART)**

MONAURAL SOURCE 117

CONVOLUTION
210

EQUALIZATION AND TRANSAURAL PROCESSING
212

ADJUSTABLE HRTF DATABASE
•HRIR(RIGHT)
•HRIR(LEFT)
214

HRTF ADJUSTMENT PROCESSING
216

112

LEFT SPEAKER
122

RIGHT SPEAKER
124

LISTENER INPUTS
121

# FIG. 2
# (PRIOR ART)

**FIG. 3**

**(PRIOR ART)**

**FIG. 4**

**(PRIOR ART)**

**FIG. 5**

**(PRIOR ART)**

**FIG. 6**
**(PRIOR ART)**

**FIG. 7**

**FIG. 8**

**FIG. 9**

**FIG. 10**

FIG. 11

**FIG. 12**

**FIG. 13**

**EP 1 551 205 B1**

## REFERENCES CITED IN THE DESCRIPTION

**Patent documents cited in the description**

- US 6125115 A
- US 5659619 A
- US 5872743 A